# EUROPEAN PATENT APPLICATION

(11) **EP 4 199 322 A1**
(43) Date of publication of application: **21.06.2023**
(21) Application number: 21216151.7
(22) Date of filing: 20.12.2021
(51) Int. Cl.: H02K 7/116, H02K 11/215, H02K 7/00, H02K 29/08

(54) **GEARED MOTOR WITH IMPROVED ANGULAR POSITION SENSING AND VEHICLE WITH SUCH A MOTOR**

(71) Applicant: Valeo eAutomotive Germany GmbH, 91056 Erlangen (DE)
(72) Inventor: Lewandowski, Marek, 91056 Erlangen (DE)
(74) Representative: Valeo Powertrain Systems

(57) **Abstract**

A Geared motor (1) is proposed, which comprises a gearbox (2) with an input shaft (8), an electric motor (3) with a rotor (18), wherein the rotor (18) is coupled to or mounted on the input shaft (8) of the gearbox (2) at a first side of the input shaft (8), and a position indicator (21), which is designed to indicate an angular position of the rotor (18). In detail, the position indicator (21) is mounted on the input shaft (8) of the gearbox (2) at a second side vis-à-vis of its first side. Moreover, a geared a vehicle (27) with such a geared motor (1) are disclosed.

## Description

### TECHNICAL FIELD

The invention relates to a geared motor, which comprises a gearbox with an input shaft, an electric motor with a rotor, wherein the rotor is coupled to or mounted on the input shaft of the gearbox at a first side of the input shaft, and a position indicator, which is designed to indicate an angular position of the rotor. Moreover, the invention relates to a vehicle having at least two axles, at least one of which is driven at least partially or intermittently by the geared motor of the above kind.

### BACKGROUND ART

A geared motor and a vehicle of the above kind generally are known in prior art. Such a gearbox can be used if a rotational speed or torque of an electric machine has to adapted to a desired rotational speed or torque in a particular application. The position of the rotor is needed for controlled actuation of the motor windings through a power converter and, if applicable, to shift gears in a non-synchronized multispeed gear. Usually, the position indicator is mounted on the rotor shaft of the electric motor what has a couple of disadvantages.

Commonly, the gearbox and the electric motor are produced independently and coupled to each other afterwards. This process step requires comparably high forces because the rotor shaft is pushed into or onto the input shaft of the gearbox to provide a press fit between the two shafts. So, this process step is made under comparably harsh conditions, which may easily lead to damage of the comparably fragile position indicator. This is particularly true, if the position indicator is mounted on the non-driven end of the electric motor because this is the place where a tool holds and forcefully moves the rotor shaft. When it is mounted on the driven end, it basically is not accessible after coupling the electric motor to the gearbox because it is covered by the housing of the electric motor and the gearbox then.

Generally, a signal of a position sensor sensing the angular position of the position indicator is lead out of the electric motor to a power converter for the electric motor by use of a cable. Unfortunately, the strong electromagnetic fields caused by the electric motor negatively influence said signal on its way along the cable. In case that the position indicator is embodied as a permanent magnet, whose rotating magnetic field is sensed by a position sensor, the situation is even worse because the strong electromagnetic fields of the electric motor negatively influence the sensing step as such, too.

### DISCLOSURE OF INVENTION

An object of the invention is to provide an improved geared motor and an improved electric vehicle. In particular, a solution shall be proposed, which reduces the risk of damaging the position indicator during manufacturing the geared motor which allows access to the position indicator after the geared motor has been manufactured and which allows for a strong and clear position signal.

The object of the invention is solved by a gearbox as disclosed in the opening paragraph, wherein the position indicator is mounted on the input shaft of the gearbox at a second side vis-à-vis of its first side.

Moreover, the object of the invention is solved by a vehicle having at least two axles, at least one of which is driven at least partially or intermittently by the geared motor of the above kind.

The proposed solution offers advantages both during manufacturing the geared motor and during operation of the same. In detail, the proposed location for the position indicator allows to mount the same at the very end or close to the end of the manufacturing process of the geared motor, in particular after the electric motor has been coupled to the gearbox. Accordingly, exposing the position indicator to the harsh conditions during this process step is avoided and the risk of damaging the same during manufacturing the geared motor is substantially reduced. Moreover, the position indicator it is easily accessible even after the electric motor has been coupled to the gearbox. Moreover, cabling for a position sensor, if needed at all, can be laid in an area which is less exposed to electromagnetic fields caused by the electric motor so that the rotation signal can be transmitted via the cable without or with just low disturbances.

In one embodiment, the position indicator can be embodied as a magnet. Accordingly, the position indicator causes a rotating magnetic field at the second end of the input shaft during operation of the electric motor so that the angular position of the rotor can be sensed by a position sensor based on the angular position of the position indicator. In particular, the position sensor can be part of the geared motor. Advantageously, the proposed location for the position indicator eases sensing the rotating magnetic field of the position indicator because it is comparably far away from the electric motor and its disturbing electromagnetic fields. Accordingly, the proposed location allows for a strong and clear position signal.

Further advantageous embodiments are disclosed in the claims and in the description as well as in the figures.

Beneficially, the position indicator is covered by a cap, which seals the housing of the gearbox. In this way, both the gearbox and the position indicator are protected against unfavorable environmental conditions. Advantageously, the cap is made of plastic. Moreover, a rotating magnetic field caused by a position indicator can be sensed in a contactless manner through the cap. Although plastic is an advantageous material for the given use, the cap may also be made of a different material, for example of stainless steel or aluminum.

Advantageously, the geared motor can comprise a power converter, which is arranged at the second side of the input shaft of the gearbox. In this embodiment, the available space in an electric vehicle can be used in an advantageous way because the gearbox can be arranged in the center axis or almost in the center axis of the electric vehicle. In turn, side shafts of the vehicle can have the same length without further measures what is advantageous for the suspension of the electric vehicle and its driving characteristics.

In a very advantageous embodiment, the position sensor is arranged within a housing of the power converter. In this way, a signal indicating the position of the rotor is directly available in the power converter without additional cabling. Because the position indicator is relatively far away from the electric motor, the rotating magnetic field caused by the position indicator moreover is little influenced by the electromagnetic field caused by the electric motor. Both allow for a strong and clear position signal.

### BRIEF DESCRIPTION OF DRAWINGS

The invention now is described in more detail hereinafter with reference to particular embodiments, which the invention however is not limited to.
- Fig. 1: a schematic cross sectional view of an exemplary geared motor and
- Fig. 2: shows a schematic view of an electric vehicle.

### DETAILED DESCRIPTION

Generally, same parts or similar parts are denoted with the same/similar names and reference signs. The features disclosed in the description apply to parts with the same/similar names respectively reference signs. Indicating the orientation and relative position is related to the associated figure.

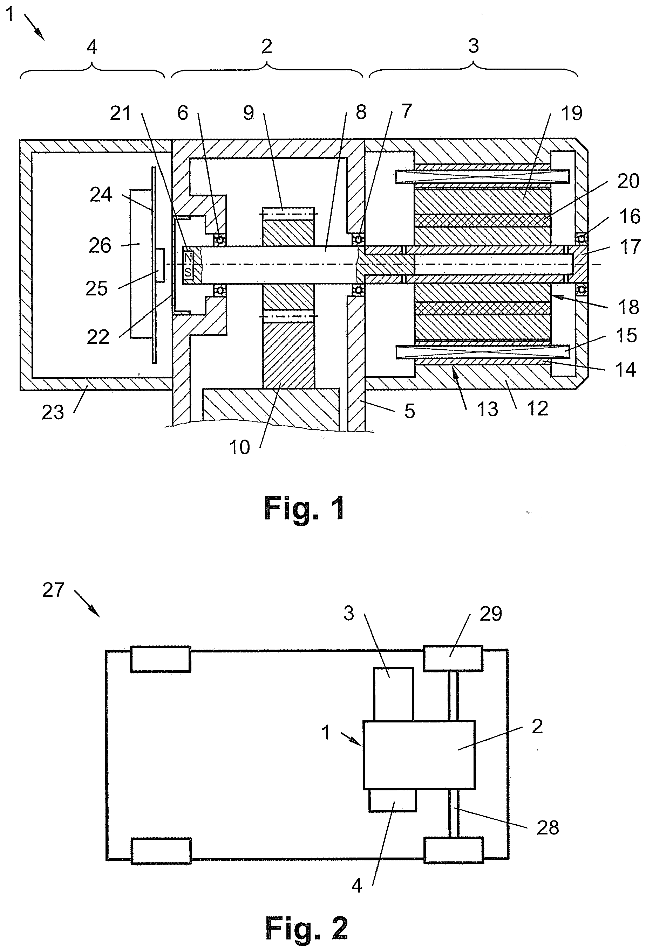

Fig. 1 shows a schematic cross sectional view of an exemplary geared motor 1, which comprises a gearbox 2, an electric motor 3 and an optional power converter 4.

The gearbox 2 comprises a housing 5, a multitude of bearings, of which two are shown in Fig. 1 - bearings 6 and 7 - arranged in the housing 5, an input shaft 8 supported by the bearings 6 and 7, a pinion 9 mounted on the input shaft 8 and a gear wheel 10 engaging with the pinion 9 and being mounted on to a further shaft of the gearbox 2 (not shown).

The electric motor 3 comprises a housing 12, a stator 13 arranged in the housing 13, wherein the stator 13 comprises a stator lamination stack 14 with stator windings 15 arranged therein, a bearing 16, a rotor shaft 17 supported by the bearing 16 and the input shaft 8 of the gearbox 2 and a rotor 18 mounted on the rotor shaft 17, wherein the rotor 18 comprises a rotor lamination stack 19 with rotor magnets 20 arranged therein.

In the example of Fig. 1, the rotor 18 is coupled to the input shaft 8 of the gearbox 2 via the rotor shaft 17 at a first side of the input shaft 8. However, in another embodiment, the input shaft 8 may be longer, and the rotor 18 may be mounted on the input shaft 8.

In addition, the geared motor 1 (in detail the gearbox 2) comprises a position indicator 21, which is designed to indicate an angular position of the rotor 18 and which is mounted on the input shaft 8 of the gearbox 2 at a second side vis-à-vis of the first side on the input shaft 8, i.e. vis-à-vis of the electric motor 3.

In this example, the position indicator 21 is embodied as a magnet and covered by a cap 22 made of plastic, which seals the housing 5 of the gearbox 2. Although this is an advantageous solution, the position indicator 21 may also embodied in another way, and the cap 22 may be made of a different material, for example of stainless steel or aluminum.

The optional power converter 4 comprises a housing 23, a printed circuit board 24, a position sensor 25, which is mounted on the printed circuit board 24 and which is designed to detect the position of the angular position of the rotor 18 based on the angular position of the position indicator 21, and further electronic parts 26 mounted on the printed circuit board 24. In this example, the position sensor 25 is arranged within the housing 23 of the power converter 4. Although this is an advantageous solution, the position indicator 21 may also be arranged out of the housing 23 of the power converter 4 and displaced from the printed circuit board 24 thereof.

As is visible in Fig. 1, the power converter 4 is arranged at the second side of the input shaft 8 of the gearbox 2 and thus vis-à-vis of the electric motor 3. Hence, there results a kind of a T-arrangement, the advantage of which particularly is visible in Fig. 2.

Fig. 2 shows an electric vehicle 27, which comprises the geared motor 1 with a gearbox 2, an electric motor 3 and a power converter 4 as outlined above. The geared motor 1 is mechanically coupled to wheels 29 of the electric vehicle 27 by means of side shafts 28. The electric motor 3 may be provided for powering the electric vehicle 27 permanently in a pure electric car or intermittently, e.g. in combination with a combustion engine in a hybrid car.

During operation, the position indicator 21 causes a rotating magnetic field at the second end of the input shaft 8, which is sensed by the position sensor 25 in a contactless manner through the cap 22. Advantageously, the position of the rotor 18 is directly available in the power converter 4 without additional cabling. Because the position indicator 21 is relatively far away from the electric motor 3, the rotating magnetic field caused by the position indicator 21 is little influenced by the electromagnetic field caused by the electric motor 3. Both allow for a strong and clear position signal. In addition, the available space in the electric vehicle 27 is used in an advantageous way so that the gearbox 2 can be arranged in the center axis or almost in the center axis of the electric vehicle 27. In turn, the side shafts 28 can have the same length without further measures what is advantageous for the suspension of the electric vehicle 27 and its driving characteristics.

It is noted that the invention is not limited to the embodiments disclosed hereinbefore, but combinations of the different variants are possible. In reality, the geared motor 1 and the electric vehicle 27 may have more or less parts than shown in the figures. Moreover, the description may comprise subject matter of further independent inventions.

It should also be noted that the term "comprising" does not exclude other elements and the use of articles "a" or "an" does not exclude a plurality. Also elements described in association with different embodiments may be combined. It should also be noted that reference signs in the claims should not be construed as limiting the scope of the claims.

### List of Reference Numerals

- 1: geared motor
- 2: gearbox
- 3: electric motor
- 4: power converter
- 5: housing of gearbox
- 6: bearing
- 7: bearing
- 8: input shaft
- 9: pinion
- 10: gear wheel
- 12: housing of electric motor
- 13: stator
- 14: stator lamination stack
- 15: stator winding
- 16: bearing
- 17: rotor shaft
- 18: rotor
- 19: rotor lamination stack
- 20: rotor magnet
- 21: position indicator
- 22: cap
- 23: housing of power converter
- 24: printed circuit board
- 25: position sensor
- 26: electronic parts
- 27: electric vehicle
- 28: side shaft
- 29: wheel

## Claims

1. Geared motor (1), comprising
- a gearbox (2) with an input shaft (8),
- an electric motor (3) with a rotor (18), wherein the rotor (18) is coupled to or mounted on the input shaft (8) of the gearbox (2) at a first side of the input shaft (8), and
- a position indicator (21), which is designed to indicate an angular position of the rotor (18),
**characterized in that**
- the position indicator (21) is mounted on the input shaft (8) of the gearbox (2) at a second side vis-à-vis of its first side.

2. Geared motor (1) as claimed in claim 1, **characterized in that** the position indicator (21) is embodied as a magnet.

3. Geared motor (1) as claimed in claim 1 or 2, **characterized in that** the position indicator (21) is covered by a cap (22), which seals the housing (5) of the gearbox (2).

4. Geared motor (1) as claimed 3, **characterized in that** the cap is made of plastic.

5. Geared motor (1) as claimed in any one of claims 1 to 4, **characterized in that** it comprises a position sensor (25), which is designed to detect the angular position of the rotor (18) based on the angular position of the position indicator (21).

6. Geared motor (1) as claimed in any one of claims 1 to 5, **characterized in that** it comprises a power converter (4), which is arranged at the second side of the input shaft (8) of the gearbox (2).

7. Geared motor (1) as claimed in claim 6, **characterized in that** the position sensor (25) is arranged within a housing (23) of the power converter (4).

8. Vehicle (27) having at least two axles, at least one of which is driven, **characterized in that** said driven is provided at least partially or intermittently by the geared motor (1) according to any one of claims 1 to 7.
